# EUROPEAN PATENT APPLICATION

(11) **EP 4 418 769 A1**
(43) Date of publication of application: **21.08.2024**
(21) Application number: 24152088.1
(22) Date of filing: 16.01.2024
(51) Int. Cl.: H04W 56/00, H04W 36/00

(54) **TIMING ADVANCE IN A RADIO ACCESS NETWORK**

(30) Priority: 17.02.2023 IN 202341010902
(71) Applicant: Nokia Technologies Oy, 02610 Espoo (FI)
(72) Inventor: KARABULUT, Umur, Munich (DE); SPAPIS, Panagiotis, Munich (DE); GÜRSU, Halit Murat, Munich (DE); STANCZAK, Jedrzej, Wroclaw (PL); SELVAGANAPATHY, Srinivasan, Bangalore (IN)
(74) Representative: Nokia EPO representatives

(57) **Abstract**

Described herein is a user equipment, UE, configured to establish a connection towards a first network node (e.g. source DU) via a first cell supported by the first network node (source DU). The UE receives configuration information related to performing measurements for a target cell as candidate cell for a cell change, wherein the target cell is supported by a second network node (target DU), and determines further configuration information related to monitoring validity of a timing advance value related to the target cell. The UE is e.g. further enabled to send towards the first network node (source DU) a first (L1) measurement report including target cell measurement info, and to receive from the first network node (source DU) an instruction to acquire timing advance value for the target cell. The UE then acquires timing advance value for target cell, and monitors the validity of acquired timing advance value based on the further configuration. The UE may then send towards the first network node (source DU) information regarding validity and/or invalidity of the timing advance value of target cell.

## Description

### TECHNOLOGY

The present disclosure relates to mobility aspects in a radio access network, in particular L1L2-triggered mobility, LTM, in particular to interruption time in the LTM handover procedure.

### BACKGROUND

Any discussion of the background art throughout the specification should in no way be considered as an admission that such art is widely known or forms part of common general knowledge in the field.

Broadly speaking, for L1L2-triggered mobility (LTM), the UE reports L1 beam measurements to the serving DU (i.e., the source DU) and the serving source DU can decide when to trigger the handover to one or more candidate target cells which are indicated with the L1 measurement report provided by the UE based on that previous L3 measurement values provided by the UE have indicated that those one or more candidate target cells are determined as being suitable cells to which the UE can be handed over.

However, before the gNB makes a decision to trigger a cell change to said one or more candidate target cells, an indefinite amount of time may have already passed since the time when the UE indicated to the gNB those one or more candidate target cells. During this indefinite amount of time, previously known or detectable candidate target cells may not be detectable any more due to for instance mobility of the UE and etc. This leads to that, while the gNB relies on the received L1 measurement report indicating the "detecable" candidate target cells, those indicated cells are as a matter of fact not detectable any more, which the gNB is however not aware of.

Therefore, when the gNB, with the above lacking of knowledge in the actual detectability of the cells, triggers cell change for those cells that the gNB considers to be still detectable, the UE after receving the trigger message from the gNB may still have to carry out searching for those candidate target cells which are in fact not known any more. The time related to such a search, namely T-search (which is part of the interruption time in the LTM handover procedure), may be up to 60ms. Only for those cells that are in fact still known to the UE, is the time related to search.

Therefore, it is necessary to resolve the above issue where the interruption time in the LTM handover procedure is indefinitely prolonged due to that, during the whole LTM handover procedure, neither the network nor the UE actively keeps track of the actual detectability of the candidate target cells for which the gNB triggeres a cell change. In other words, it is necessary to propose methods and corresponding apparatuses for ensuring that for candidate target cells that are still known at the time of the gNB triggering a cell change, the T-search time is set to be 0, so as to reduce latency induced in the handover procedure, whereas for cell that are not any more known, it is necessary to provide a mechanism where at least the UE and the gNB are informed in particular of the possible delay induced.

### SUMMARY

In accordance with an aspect of the present disclosure, there is provided a User equipment (UE) configured to support establishing a connection towards at least one network node of a radio access network, RAN, the UE comprising:
at least one processor; and
at least one memory storing instructions that, when executed by the at least one processor, cause the UE at least to:
   - establish a connection towards a first network node (source DU) via a first cell supported by the first network node (source DU),
   - receive configuration information related to performing measurements for a target cell as candidate cell for a cell change, wherein the target cell is supported by a second network node (target DU),
   - determine further configuration information related to monitoring validity of a timing advance value related to the target cell,
   - send towards the first network node (source DU) a first (L1) measurement report including target cell measurement info,
   - receive from the first network node (source DU) an instruction to acquire timing advance value for the target cell,
   - acquire timing advance value for target cell,
   - monitor the validity of acquired timing advance value based on the further configuration,
   - send towards the first network node (source DU) information regarding validity and/or invalidity of the timing advance value of target cell.

E.g. enabling the user equipment (UE) to monitor and send information related to the validity and/or invalidity of an acquired timing advance value, provides the receiving network node with relevant information regarding a cell switch and thus help to faster handover the user equipment form a serving/source cell towards a target cell. If the UE has a valid timing advance value of a cell, e.g. the target cell to switch to, the handover can be triggered in the form of RACHless, which saves times and reduces interruption time.

The First network node may e.g. be implemented as a network node that supports distributed unit, DU, functionality and/or a layer 2 protocol processing of a radio access network, RAN, a source DU, a serving DU, a serving gNB, a 5G gNB, a NR gNB, and/or a base station, which offers a broad applicability to different RAN implementation.

The Second network node may e.g. be implemented as a network node that supports distributed unit, DU, functionality and/or a layer 2 protocol processing of a radio access network, RAN, a target DU, a target gNB, a 5G gNB, a NR gNB, and/or a base station, which again offers brod applicability to different RAN implementations. The first and the second network node could be the same of different nodes.

A Third network node may e.g. be implemented as a network node that supports central unit, CU, functionality and/or a layer 3 protocol processing of a radio access network, RAN, a CU, a source CU, a serving CU, a source gNB, a 5G gNB, a NR gNB, and/or a base station. The Third network node may control the first network node and/or the second network node. The first and the second network node may be controlled by the same node or by different nodes.

The User equipment may e.g. be implemented as an apparatus or equipment that supports layer 2 and layer 3 protocol processing of a radio access network, RAN, a smartphone, and/or a mobile terminal.

The Measurement report may e.g. be implemented as or based on Layer 1 (L1) measurement report, Layer 3 (L3) measurement report.

The configuration information related to performing measurements for a target cell as candidate cell for a cell change, wherein the target cell is supported by a second network node (target DU) may be received via an RRC Reconfiguration message and/or Layer 3 (L3) message. The message may be received from a network node supporting L3, e.g. supporting central unit (CU) functionality, this may depend on the implementation. The message may be received from the first network node in case it supports L3 as well. The message is e.g. used to configure the UE with L1 measurement usable for a Lower Layer Mobility (LLM) triggered cell change.

Determining further configuration information related to monitoring validity of a timing advance value related to the target cell may be based on further configuration information received from e.g. the first network node, or the third network node. The further configuration information may e.g. also include the reporting of the invalidity condition for the UE, e.g. when to report, how to report, which message to use, format of reporting, etc.

The order of the indicated processing steps is not necessarily a sequential order, e.g. send towards the first network node (source DU) a first (L1) measurement report including target cell measurement info may in some configurations or circumstances be performed after receiving from the first network node (source DU) an instruction to acquire timing advance value for the target cell, which also means that the decision whether to send such instruction on the network side may depend on received measurements and/or other criteria. Measurement reports can be send e.g. on a periodic or aperiodic (e.g. event based) basis.

In some examples the User equipment (UE) may be further configured to determine further configuration condition including an invalidity condition related to a power difference or relationship or comparison between at least two signal level or quality values, e.g. RSRP values, RSRQ values, or SINR values, measured by the UE and related to the target cell and/or the first cell.

Two RSRP values may e.g. refer to: The target and/or source RSRP value P_(TA,target) and/or P_(TA,serving) measured and (intermediately) stored within a certain time period, e.g. shortly before of after TA acquisition, e.g. between receiving the trigger to acquire the TA and the acquisition of the TA (e.g. options 1 to 4 further below).

The target and/or source RSRP value P_(current,target) and/or P_(current,serving) for the time after the TA is acquired may be measured and (intermediately) stored and used for comparing with previously stored values.

In some examples the User equipment (UE) may be further configured to determine further configuration condition including an invalidity condition related to beam measurement values measured by the UE and related to the target cell.

The beam measurement values may refer to the beam ID, e.g. the initial strongest beam ID and the later strongest beam ID, e.g. measured before and after TA acquisition, respectively.

In some examples the User equipment (UE) may be further configured to determine further configuration condition including an invalidity condition related to a difference or relationship or comparison between at least two timing values measured by the UE and related to downlink synchronization signals of the target cell and/or the first cell.

The timing values may refer to the initial and later DL sync values, e.g. one for initial TA acquision and later for after TA acquisition.

In some examples the User equipment (UE) may be further configured to:
- monitor the validity of acquired timing advance value based on the received invalidity condition,
- send towards the first network node (source DU) an invalidity information if the invalidity condition is met.

When the UE monitors the validity and detects invalidity, then the UE may re-acquire the timing advance value autonomously, e.g. without awaiting a trigger from the network to re-acquire the timing advance value. In case of such autonomous re-acquisition the UE may avoid sending an invalidity information to the network, and/or may send a validity information when the timing advance value has been re-acquired. Sending towards the first network node (source DU) information regarding validity of the timing advance value of target cell may also refer to the sucessful first acquisition of the timing advance value.

Receiving a specific invalidation condition per cell, e.g. enables the UE to perform adjusted measurements and monitoring thus enabling a more precise visibility of the acquired TA and its validity. The more accurate the validity can be determined, the higher the probability that a RACHless handover can be performed in case cell change is triggered; which e.g. reduces interruption time, and thus, in particular, is beneficial in case of LLM handover, which is configured to enable fast handover.

In accordance with another aspect of the present disclosure, there is provided a First network node (source DU) configured to support establishing a connection towards at least one user equipment (UE) via a radio access network, RAN, the first network node (source DU) comprising:
at least one processor; and
at least one memory storing instructions that, when executed by the at least one processor, cause the first network node (source DU) at least to:
   - establish a connection towards a user equipment (UE) via a first cell supported by the first network node (source DU),
   - determine configuration information related to monitoring validity of a timing advance value related to the target cell as candidate cell for a cell change, wherein the target cell is supported by a second network node (target DU),
   - receiving from the user equipment (UE) a first (L1) measurement report including target cell measurement info,
   - send towards the user equipment (UE) an instruction to acquire timing advance value for the target cell,
   - receiving from the user equipment (UE) a second (L1) measurement report including target cell measurement info,
      - monitor the validity of the acquired timing advance value based on related determined configuration.

In some examples the First network node (source DU) may be further configured to support:
- send towards the user equipment a trigger to re-acquire timing advance value of target cell if the validity of the acquired timing advance value expired.

The order of the indicated processing steps is not necessarily a sequential order, e.g. send towards the first network node (source DU) a first (L1) measurement report including target cell measurement info may in some configurations or circumstances be performed after receiving from the first network node (source DU) an instruction to acquire timing advance value for the target cell, which also means that the decision whether to send such instruction on the network side may depend on received measurements and/or other criteria. Measurement reports can be send e.g. on a periodic or aperiodic (e.g. event based) basis.

In some examples the First network node (source DU) may be further configured to support:
determining the configuration condition includes an invalidity condition related to a power difference or relationship or comparison between at least two signal level or quality values, e.g. RSRP values, RSRQ values, or SINR values, measured by the UE and related to the target cell and/or the first cell. The UE may report information related to the measured values to the first network node, e.g. absolute values may be reported or pre-processed related information, e.g. differences to previous value, or else.

Two RSRP values may e.g. refer to: The target and/or source RSRP value P_(TA,target) and/or P_(TA,serving) measured and (intermediately) stored within a certain time period, e.g. shortly before of after TA acquisition, e.g. between receiving the trigger to acquire the TA and the acquisition of the TA. The target and/or source RSRP value P_(current,target) and/or P_(current,serving) for the time after the TA is acquired may be measured and (intermediately) stored and used for comparing with previously stored values.

In some examples the First network node (source DU) may be further configured to support:
determining the configuration condition includes an invalidity condition related to beam measurement values measured by the UE and related to the target cell. The UE may report information related to the measured beam values to the first network node, e.g. absolute values may be reported or pre-processed related information, e.g. differences to previous value, or else. The beam measurement values may refer to the beam ID, e.g. the initial strongest beam ID and the later strongest beam ID, e.g. measured before and after TA acquisition, respectively.

In some examples the First network node (source DU) may be further configured to support:
determining the configuration condition includes an invalidity condition related to a difference or relationship or comparison between at least two timing values measured by the UE and related to downlink synchronization signals of the target cell and/or the first cell. The UE may report information related to the measured timing values to the first network node, e.g. absolute values may be reported or pre-processed related information, e.g. differences to previous value, or else. The timing values may refer to the initial and later DL sync values, e.g. one for initial TA acquision and later for after TA acquisition.

In some examples the First network node (source DU) may be further configured to support:
- monitor the validity of acquired timing advance value based on the determined invalidity condition,
- send towards the user equipment (UE) an indication to re-acquire the timing advance value of the target cell if the invalidity condition is met.

In some examples the First network node (source DU) may be further configured to support:
- monitor the validity of acquired timing advance value based on the determined invalidity condition,
- determine and monitor a cell switch condition, and if the cell switch condition is met,
   - send towards the user equipment (UE) an indication to perform cell switch to the target cell by sending a MAC CE message that includes a RACH based handover instruction if the invalidity condition is met, or by sending a MAC CE message that includes a RACHless based handover instruction if the timing advance value of the target cell is still valid.

In some examples the First network node (source DU) may be further configured to support:
determining the configuration condition is received from a third network node, wherein the third network node (CU) is connected to and controls the first network node (source DU).

In some examples the First network node (source DU) may be further configured to support:
- determine configuration information related to monitoring validity of a timing advance value related to the second target cell as candidate cell for a cell change, wherein the second target cell is supported by a network node different from the first network node (source DU),
- receiving from the user equipment (UE) the first (L1) measurement report including also the second target cell measurement info,
- send towards the user equipment (UE) an instruction to acquire timing advance value for the second target cell,
- receiving from the user equipment (UE) the second (L1) measurement report including also the second target cell measurement info,
- monitor the validity of the acquired timing advance values based on related determined configuration.

In some examples the First network node (source DU) may be further configured to support:
- determine and monitor a cell switch condition for the target cell,
- determine and monitor a cell switch condition for the second target cell, and if the cell switch condition for both target and second target cell are met,
- determine the validity of the acquired related timing advance values, and
- decide to switch to the cell which has a valid timing advance value.

In accordance with another aspect of the present disclosure, there is provided a method for a User equipment (UE), the method comprising:
- establishing a connection towards a first network node (source DU) via a first cell supported by the first network node (source DU),
- receiving configuration information related to performing measurements for a target cell as candidate cell for a cell change, wherein the target cell is supported by a second network node (target DU),
- determining further configuration information related to monitoring validity of a timing advance value related to the target cell,
- sending towards the first network node (source DU) a first (L1) measurement report including target cell measurement info,
- receiving from the first network node (source DU) an instruction to acquire timing advance value for the target cell,
- acquiring timing advance value for target cell,
- monitoring the validity of acquired timing advance value based on the further configuration,
- sending towards the first network node (source DU) information regarding validity and/or invalidity of the timing advance value of target cell.

In accordance with another aspect of the present disclosure, there is provided a method for a first network node (source DU), the method comprising:
- establishing a connection towards a user equipment (UE) via a first cell supported by the first network node (source DU),
- determining configuration information related to monitoring validity of a timing advance value related to the target cell as candidate cell for a cell change, wherein the target cell is supported by a second network node (target DU),
- receiving from the user equipment (UE) a first (L1) measurement report including target cell measurement info,
- sending towards the user equipment (UE) an instruction to acquire timing advance value for the target cell,
- receiving from the user equipment (UE) a second (L1) measurement report including target cell measurement info,
- monitoring the validity of the acquired timing advance value based on related determined configuration.

In accordance with another aspect of the present disclosure, there is provided a computer program comprising instructions for causing an apparatus to perform the method according to any one of the methods described above.

In accordance with another aspect of the present disclosure, there is provided a memory storing computer readable instructions for causing an apparatus to perform the method according to any one of methods described above.

In accordance with another aspect of the present disclosure, there is provided an apparatus comprising means for performing the method steps of any one of the methods described above.

According to some example embodiments, there is also provided a computer program comprising instructions for causing an apparatus to perform a method as disclosed in the present disclosure.

According to some example embodiments, there is also provided a memory storing computer readable instructions for causing an apparatus to perform a method as disclosed in the present disclosure.

In addition, according to some other example embodiments, there is provided, for example, a computer program product for a wireless communication device comprising at least one processor, including software code portions for performing the respective steps disclosed in the present disclosure, when said product is run on the device. The computer program product may include a computer-readable medium on which said software code portions are stored. Furthermore, the computer program product may be directly loadable into the internal memory of the computer and/or transmittable via a network by means of at least one of upload, download and push procedures.

While some example embodiments will be described herein with particular reference to the above application, it will be appreciated that the present disclosure is not limited to such a field of use, and is applicable in broader contexts.

Notably, it is understood that methods according to the present disclosure relate to methods of operating the apparatuses according to the above example embodiments and variations thereof, and that respective statements made with regard to the apparatuses likewise apply to the corresponding methods, and vice versa, such that similar description may be omitted for the sake of conciseness. In addition, the above aspects may be combined in many ways, even if not explicitly disclosed. The skilled person will understand that these combinations of aspects and features/steps are possible unless it creates a contradiction which is explicitly excluded.

Implementations of the disclosed apparatuses may include using, but not limited to, one or more processor, one or more application specific integrated circuit (ASIC) and/or one or more field programmable gate array (FPGA). Implementations of the apparatus may also include using other conventional and/or customized hardware such as software programmable processors, such as graphics processing unit (GPU) processors.

Other and further example embodiments of the present disclosure will become apparent during the course of the following discussion and by reference to the accompanying drawings.

### BRIEF DESCRIPTION OF THE DRAWINGS

Example embodiments of the disclosure will now be described, by way of example only, with reference to the accompanying drawings in which:
Figure 1 is a block diagram of one possible and non-limiting system in which the example embodiments may be practiced;
Figure 2 schematically illustrates an example of LTM cases in rel-18 with inter-CU, intra-CU and inter-DU cell switches;
Figure 3 schematically illustrates an exemplary signalling diagram for L1/2 triggered mobility (LTM);
Figure 4 schematically illustrates an example of a first embodiment;
Figure 5 schematically illustrates an example of a second embodiment;
Figure 6 schematically illustrates an example of a third embodiment;
Figure 7 schematically illustrates an example apparatus configured to implement at least one example described herein;
Figure 8 schematically illustrates an example of a method to implement at least one example described herein;
Figure 9 schematically illustrates an example of a method to implement at least one example described herein.

### DESCRIPTION OF EXAMPLE EMBODIMENTS

In the following, different exemplifying embodiments will be described using, as an example of a communication network to which examples of embodiments may be applied, a communication network architecture based on 3GPP standards for a communication network, such as a 5G/NR, without restricting the embodiments to such an architecture, however. It is apparent for a person skilled in the art that the embodiments may also be applied to other kinds of communication networks where mobile communication principles are integrated with a D2D (device-to-device) or V2X (vehicle to everything) configuration, such as SL (side link), e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc. Furthermore, without loss of generality, the description of some examples of embodiments is related to a mobile communication network, but principles of the disclosure can be extended and applied to any other type of communication network, such as a wired communication network.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules, etc., that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed unit (DU) or a centralized/central unit (CU), which controls a respective coverage area or cell(s) and with which one or more communication stations such as communication elements or functions, like user devices or terminal devices, like a user equipment (UE), or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The following description may provide further details of alternatives, modifications and variances: a gNB comprises e.g., a node providing NR user plane and control plane protocol terminations towards the UE, and connected via the NG interface to the 5GC, e.g., according to 3GPP TS 38.300 V16.6.0 (2021-06) section 3.2 incorporated by reference.

A gNB Central Unit (gNB-CU) comprises e.g., a logical node hosting e.g., RRC, SDAP and PDCP protocols of the gNB or RRC and PDCP protocols of the en-gNB that controls the operation of one or more gNB-DUs. The gNB-CU terminates the F1 interface connected with the gNB-DU.

A gNB Distributed Unit (gNB-DU) comprises e.g., a logical node hosting e.g., RLC, MAC and PHY layers of the gNB or en-gNB, and its operation is partly controlled by the gNB-CU. One gNB-DU supports one or multiple cells. One cell is supported by only one gNB-DU. The gNB-DU terminates the F1 interface connected with the gNB-CU.

A gNB-CU-Control Plane (gNB-CU-CP) comprises e.g., a logical node hosting e.g., the RRC and the control plane part of the PDCP protocol of the gNB-CU for an en-gNB or a gNB. The gNB-CU-CP terminates the E1 interface connected with the gNB-CU-UP and the F1-C interface connected with the gNB-DU.

A gNB-CU-User Plane (gNB-CU-UP) comprises e.g., a logical node hosting e.g., the user plane part of the PDCP protocol of the gNB-CU for an en-gNB, and the user plane part of the PDCP protocol and the SDAP protocol of the gNB-CU for a gNB. The gNB-CU-UP terminates the E1 interface connected with the gNB-CU-CP and the F1-U interface connected with the gNB-DU, e.g., according to 3GPP TS 38.401 V16.6.0 (2021-07) section 3.1 incorporated by reference.

Different functional splits between the central and distributed unit are possible, e.g., called options:
Option 1 (1A-like split):
   ∘ The function split in this option is similar to the 1A architecture in DC. RRC is in the central unit. PDCP, RLC, MAC, physical layer and RF are in the distributed unit.
Option 2 (3C-like split):
   ∘ The function split in this option is similar to the 3C architecture in DC. RRC and PDCP are in the central unit. RLC, MAC, physical layer and RF are in the distributed unit.
Option 3 (intra RLC split):
   ∘ Low RLC (partial function of RLC), MAC, physical layer and RF are in the distributed unit. PDCP and high RLC (the other partial function of RLC) are in the central unit.
Option 4 (RLC-MAC split):
   ∘ MAC, physical layer and RF are in the distributed unit. PDCP and RLC are in the central unit.
Or else, e.g., according to 3GPP TR 38.801 V14.0.0 (2017-03) section 11 incorporated by reference.

A gNB supports different protocol layers, e.g., Layer 1 (L1) - physical layer.

The layer 2 (L2) of NR is split into the following sublayers: Medium Access Control (MAC), Radio Link Control (RLC), Packet Data Convergence Protocol (PDCP) and Service Data Adaptation Protocol (SDAP), where e.g.:
∘ The physical layer offers to the MAC sublayer transport channels;
∘ The MAC sublayer offers to the RLC sublayer logical channels;
∘ The RLC sublayer offers to the PDCP sublayer RLC channels;
∘ The PDCP sublayer offers to the SDAP sublayer radio bearers;
∘ The SDAP sublayer offers to 5GC QoS flows;
∘ Comp. refers to header compression and Segm. To segmentation;
∘ Control channels include (BCCH, PCCH).

Layer 3 (L3) includes e.g., Radio Resource Control (RRC), e.g., according to 3GPP TS 38.300 V16.6.0 (2021-06) section 6 incorporated by reference.

A RAN (Radio Access Network) node or network node like e.g. a gNB, base station, gNB CU or gNB DU or parts thereof may be implemented using e.g. an apparatus with at least one processor and/or at least one memory (with computer-readable instructions (computer program)) configured to support and/or provision and/or process CU and/or DU related functionality and/or features, and/or at least one protocol (sub-)layer of a RAN (Radio Access Network), e.g. layer 2 and/or layer 3.

The gNB CU and gNB DU parts may e.g., be co-located or physically separated. The gNB DU may even be split further, e.g., into two parts, e.g., one including processing equipment and one including an antenna. A Central Unit (CU) may also be called BBU/REC/RCC/C-RAN/V-RAN, O-RAN, or part thereof. A Distributed Unit (DU) may also be called RRH/RRU/RE/RU, or part thereof. Hereinafter, in various example embodiments of the present disclosure, the CU-CP (or more generically, the CU) may also be referred to as a (first) network node that supports at least one of central unit control plane functionality or a layer 3 protocol of a radio access network; and similarly, the DU may be referred to as a (second) network node that supports at least one of distributed unit functionality or the layer 2 protocol of the radio access network.

A gNB-DU supports one or multiple cells, and could thus serve as e.g., a serving cell for a user equipment (UE).

A user equipment (UE) may include a wireless or mobile device, an apparatus with a radio interface to interact with a RAN (Radio Access Network), a smartphone, an in-vehicle apparatus, an IoT device, a M2M device, or else. Such UE or apparatus may comprise: at least one processor; and at least one memory including computer program code; wherein the at least one memory and the computer program code are configured to, with the at least one processor, cause the apparatus at least to perform certain operations, like e.g. RRC connection to the RAN. A UE is e.g., configured to generate a message (e.g., including a cell ID) to be transmitted via radio towards a RAN (e.g., to reach and communicate with a serving cell). A UE may generate and transmit and receive RRC messages containing one or more RRC PDUs (Packet Data Units).

The UE may have different states (e.g., according to 3GPP TS 38.331 V16.5.0 (2021-06) sections 42.1 and 4.4, incorporated by reference).

A UE is e.g., either in RRC_CONNECTED state or in RRC_INACTIVE state when an RRC connection has been established.

In RRC_CONNECTED state a UE may:
∘ store the AS context;
∘ transfer unicast data to/from the UE;
∘ monitor control channels associated with the shared data channel to determine if data is scheduled for the data channel;
∘ provide channel quality and feedback information;
∘ perform neighboring cell measurements and measurement reporting.

The RRC protocol includes e.g. the following main functions:
∘ RRC connection control;
∘ measurement configuration and reporting;
∘ establishment/modification/release of measurement configuration (e.g. intra-frequency, inter-frequency and inter-RAT measurements);
∘ setup and release of measurement gaps;
∘ measurement reporting.

3GPP RAN groups are discussing about L1L2-Triggered Mobility (LTM). Namely to specify mechanism and procedures of L1/L2 based inter-cell mobility for mobility latency reduction: Configuration and maintenance for multiple candidate cells to allow fast application of configurations for candidate cells [RAN2, RAN3]; Dynamic switch mechanism among candidate serving cells (including SpCell and SCell) for the potential applicable scenarios based on L1/L2 signalling [RAN2, RAN1]; L1 enhancements for inter-cell beam management, including L1 measurement and reporting, and beam indication [RAN1, RAN2] (Note 1: Early RAN2 involvement is necessary, including the possibility of further clarifying the interaction between this bullet with the previous bullet); Timing Advance management [RAN1, RAN2]; and CU-DU interface signaling to support L1/L2 mobility, if needed [RAN3]. Note 2: FR2 specific enhancements are not precluded, if any. Note 3: The procedure of L1/L2 based inter-cell mobility are applicable to the following scenarios: Standalone, CA and NR-DC case with serving cell change within one CG; Intra-DU case and intra-CU inter-DU case (applicable for Standalone and CA: no new RAN interfaces are expected); Both intra-frequency and inter-frequency; Both FR1 and FR2. Source and target cells may be synchronized or non-synchronized.

The main goal of this work is to reduce the handover latency in the scenarios described above.

In general, for L1L2 Triggered Mobility (LTM) it is expected that the UE reports L1 beam measurements to the serving DU and as such the serving DU can decide when to trigger the handover. The purpose of this is to simplify many of the network and UE mobility procedures as well as reduce the interruption time / delay caused by the mobility. Furthermore, network data forwarding, scheduling are expected to also benefit from LTM. In the LTM, UE may maintain configuration of multiple cells to apply the fast application of each configuration.

The LTM may involve serving cell change or not, and it can use either RACH or be RACH-less.

In LTM, the serving DU triggers the execution of the prepared target cell configuration based on lower layer signaling, which can be either MAC Control Element (MAC CE) or Downlink Control Information (DCI). Upon triggering the cell change, the serving DU informs the CU such that the CU can stop sending any RRC Reconfiguration over the serving cell radio link and initiate data forwarding to the target cell, if needed.

LTM is expected to use L1 measurements. These measurements have the benefit of faster reaction time to radio link degradation in the serving link as the network can save the delay introduced by L3 filtering and Time to Trigger (TTT) for the handover decision. This should result in reducing in the number of radio link failures compared to baseline handover.

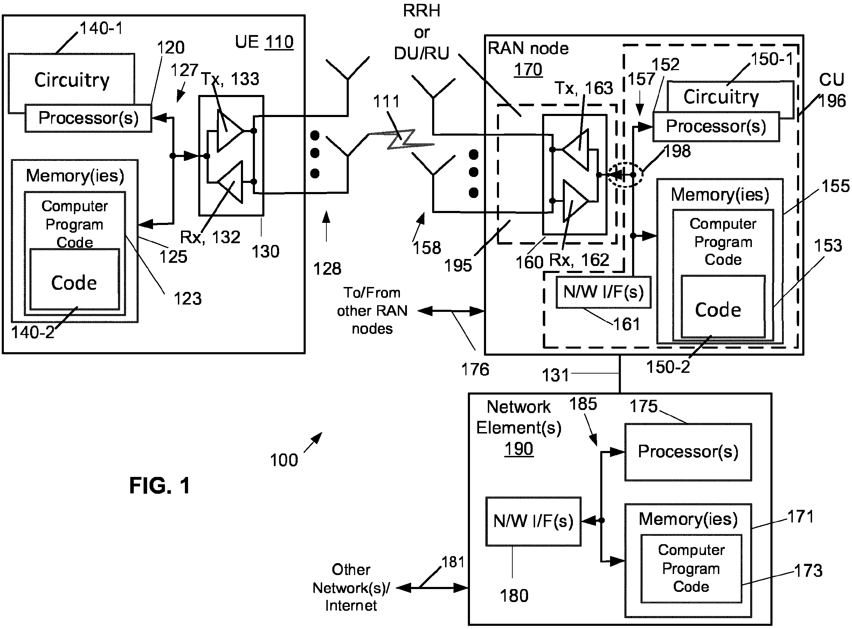

Turning to FIG. 1, this figure shows a block diagram of one possible and non-limiting example of an illustration of a wireless network 100 in which the examples may be practiced. A user equipment (UE) 110, a radio access network (RAN) node 170, and a network element(s) 190 are illustrated. In the example of FIG. 1, the user equipment (UE) 110 is in wireless communication with RAN node 170. A UE is a device with a radio interface to access the wireless network 100. The UE 110 includes e.g. one or more processors 120, one or more memories 125 (with computer program code stored thereon), and one or more transceivers 130 interconnected through one or more buses 127 or other wired connections. At least one of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. At least one of the one or more transceivers 130 is connected to at least one or more antennas 128. At least one of the one or more memories 125 includes computer program code 123. The UE 110 includes circuitry 140-1 and/or code 140-2, which may be implemented in a number of ways. The circuitry 140-1 may be implemented in hardware, such as being implemented as part of the one or more processors 120. The circuitry 140-1 may be implemented also as an integrated circuit or through other hardware such as a programmable gate array. In another example, code 140-2, may be implemented as computer program code 123 and is executable by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless or radio link 111. Circuitry 140-1 and/or code 140-2 may provide L2 and/or L3 functionality, e.g. L2 and/or L3 control plane signal processing.

The RAN node 170 in this example is a base station that provides access to the UE 110. The RAN node 170 may be, for example, a base station for 5G, also called New Radio (NR). In 5G, the RAN node 170 may be a NG-RAN node, e.g. a gNB or an ng-eNB. A gNB is a node providing NR user plane and control plane protocol terminations towards the UE, and connected via the NG interface (such as connection 131) to a 5GC (such as, for example, the network element(s) 190). The ng-eNB is a node providing E-UTRA user plane and control plane protocol terminations towards the UE, and connected via the NG interface (such as connection 131) to the 5GC. The NG-RAN node may include multiple gNBs. A gNB may include a central unit (CU) (gNB-CU) 196 and one or more distributed unit(s) (DUs) (gNB-DUs), of which DU 195 is shown. Note that the DU 195 may include or be coupled to and control a radio unit (RU). The gNB-CU 196 is a logical node which may host radio resource control (RRC), SDAP and PDCP protocols of the gNB or RRC and PDCP protocols of the en-gNB that control the operation of one or more gNB-DUs. The gNB-CU 196 terminates the F1 interface connected with the gNB-DU 195. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU 195 is a logical node which may host RLC, MAC and PHY layers of the gNB or en-gNB, and its operation is partly controlled by gNB-CU 196. One gNB-DU 195 supports one or multiple cells. One cell may be supported with one gNB-DU 195, or one cell may be supported/shared with multiple DUs under RAN sharing. The gNB-DU 195 terminates the F1 interface 198 connected with the gNB-CU 196. Note that the gNB-DU 195 may include at least one processor and at least one memory with computer program code stored thereon, and the transceiver 160, e.g., as part of a Radio Unit (RU), but some examples of this may have the transceiver 160 as part of a separate RU, e.g., under control of and connected to the gNB-DU 195. The one or more transceivers 160 are connected to one or more antennas 158. The gNB-DU 195 may further include circuitry and/or code which may provide L2 functionality, e.g. L2 control plane signal processing. The RAN node 170 may also be an eNB (evolved NodeB) base station, for LTE (long term evolution), or any other suitable base station or node.

The gNB-CU 196 (and/or RAN node 170) may include one or more processors 152, one or more memories 155, one or more network interfaces (N/W I/F(s)) 161, interconnected through one or more buses 157 or other wired connections. At least one of the one or more memories 155 includes computer program code 153, e.g. computer-readable instructions. The DU 195 may also contain its own memory/memories and processor(s), and/or other hardware.

The RAN node 170 (and/or CU 196 and/or DU 195) includes circuitry 150-1 and/or code 150-2, which may be implemented in a number of ways. The circuitry 150-1 may be implemented in hardware, such as being implemented as part of the one or more processors 152. The circuitry 150-1 may be implemented also as an integrated circuit or through other hardware such as a programmable gate array. In another example, code 150-2, may be implemented as computer program code 153 and is executable by the one or more processors 152. For instance, the one or more memories 155 and the computer program code 153 may be configured to, with the one or more processors 152, cause the gNB-CU 196 (and/or RAN node 170 and/or DU 195) to perform one or more of the operations as described herein. Circuitry 150-1 and/or code 150-2 may provide L3 functionality, e.g. L3 control plane signal processing.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU 195, and the one or more buses 157 could be implemented in part as, for example, fiber optic cable or other suitable network connection to connect the other elements (e.g., a central unit (CU), gNB-CU 196) of the RAN node 170 to the RRH/DU 195. Reference 198 also indicates those suitable network link(s).

It is noted that the description herein indicates that "cells" perform functions, but it should be clear that equipment which forms the cell may perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include location management functions (LMF(s)) and/or access and mobility management function(s) (AMF(S)) and/or user plane functions (UPF(s)) and/or session management function(s) (SMF(s)). Such core network functionality for LTE may include MME (Mobility Management Entity)/SGW (Serving Gateway) functionality. Such core network functionality may include SON (self-organizing/optimizing network) functionality. These are merely example functions that may be supported by the network element(s) 190, and note that both 5G and LTE functions might be supported. The RAN node 170 is coupled via a link 131 to the network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, non-transitory memory, transitory memory, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, network element(s) 190, and other functions as described herein.

In general, the various embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, head mounted displays such as those that implement virtual/augmented/mixed reality, as well as portable units or terminals that incorporate combinations of such functions.

Accordingly, UE 110, RAN node 170, and/or network element(s) 190, (and associated memories, computer program code and modules) may be configured to implement (e.g. in part) the examples described herein, including enabling using per-target-cell CU-UP in CPA/CPC initiation. Thus, computer program code 123, circuitry 140-1, code 140-2, and other elements/features shown in FIG. 1 of UE 110 may be configured to implement user equipment related aspects of the examples described herein. Similarly, computer program code 153, circuitry 150-1, code 150-2, and other elements/features shown in FIG. 1 of RAN node 170, including the CU 196 and DU 195, may be configured to implement RAN/gNB/TRP related aspects of the examples described herein. Computer program code 173 and other elements/features shown in FIG. 1 of network element(s) 190 may be configured to implement network element related aspects of the examples described herein.

Having thus introduced a suitable but non-limiting technical context for the practice of the example embodiments, the example embodiments are now described with greater specificity.

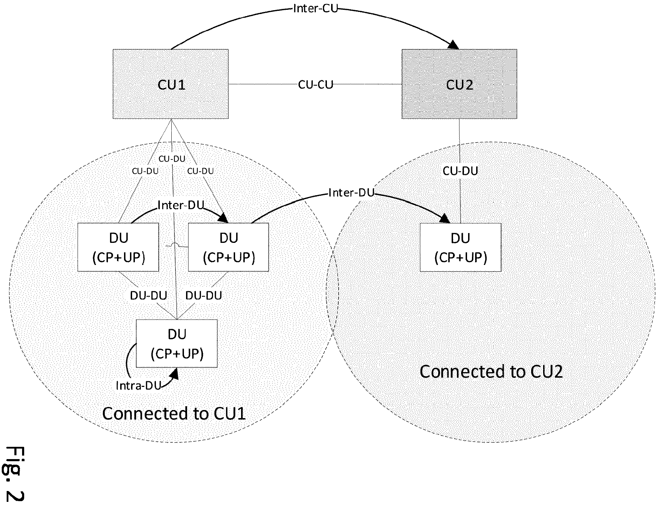

To illustrate different LTM scenarios, Figure 2 shows the difference between inter-CU (L3 Handover) and intra-CU, inter-DU cell switches. The release-18 work focuses initially on intra- and inter-DU cases. The scope can be extended further in the future releases.

According to for instance NR38.133, V17.6.0, *"Technical Specification Group Radio Access Network; NR; Requirements for support of radio resource management",* section 9.13.2, the known condition of a cell in 3GPP is defined as follows, namely that the cell with different Physical Cell ID (PCI) from serving cell is considered as known if the following conditions are met in this requirement:
- The SSB of the cell with different PCI from serving cell has the same SCS and center frequency as the SSB of the PCell;
- The timing difference of arrival at UE between the SSBs of serving cell and cell with different PCI is less than CP length of the corresponding SCS;
- The UE has sent a valid L3 measurement report during the last 5 seconds; and
- The SSB from the cell with different PCI remains detectable according to the cell identification requirements specified in clause 9.2.
- Otherwise, the cell is unknown.

The above conditions are defined from UE perspective and with reference to Synchronization Signal/PBCH Block (SSB).

The first condition states that "The SSB of the cell with different PCI from serving cell has the same SCS and center frequency as the SSB of the PCell". This is the definition that RAN4 has agreed in the last meeting for intra-frequency measurement. From the tdoc reviews from the current meeting, there is a trend that inter-frequency measurements are considered in LTM. As a result, the above known condition would have to be revised for LTM case.

The second condition states that "The timing difference of arrival at UE between the SSBs of serving cell and cell with different PCI is less than CP length of the corresponding SCS". This is the definition for synchronised or asynchronized transmission. It is also being discussed if this concept shall be adopted in the case of LTM.

The last two criteria are not definition related, and straight forward as measurements report or values are obvious to see. Hence, these two criteria are discussed in the present disclosure.

The detectability of the SSB as defined in NR 38.133, Clause 9.2/9.3 is that *"The UE shall be able to identify new intra*/*inter-frequency cells and perform SS-RSRP, SS-RSRQ, and SS-SINR measurements of identified intra*/*inter-frequency cells if carrier frequency information is provided by PCell or the PSCell, even if no explicit neighbour list with physical layer cell identities is provided*."

An intra/inter-frequency cell shall be considered detectable when for each relevant SSB:
- SS-RSRP related side conditions given in NR38.133, clauses 10.1.4 and 10.1.5 for FR1 and FR2, respectively, for a corresponding Band,
- SS-RSRQ related side conditions given in NR38.133, clauses 10.1.9 and 10.1.10 for FR1 and FR2, respectively, for a corresponding Band,
- SS-SINR related side conditions given in NR38.133, clauses 10.1.14 and 10.1.15 for FR1 and FR2, respectively, for a corresponding Band,
- SSB_RP and SSB Ês/Iot according to NR38.133, Annex B.2.3 for a corresponding Band.

As explained above, the candidate cell RRC configurations are prepared by the CU based on L3 measurements. UE does the L1 measurements for the candidate cells, and DU triggered the serving cell change based on those L1 measurements.

According to some example embodiments, there are also provided corresponding methods suitable to be carried out by the apparatuses (network elements/components) as described above, such as the UE, the CU, the DU, etc.

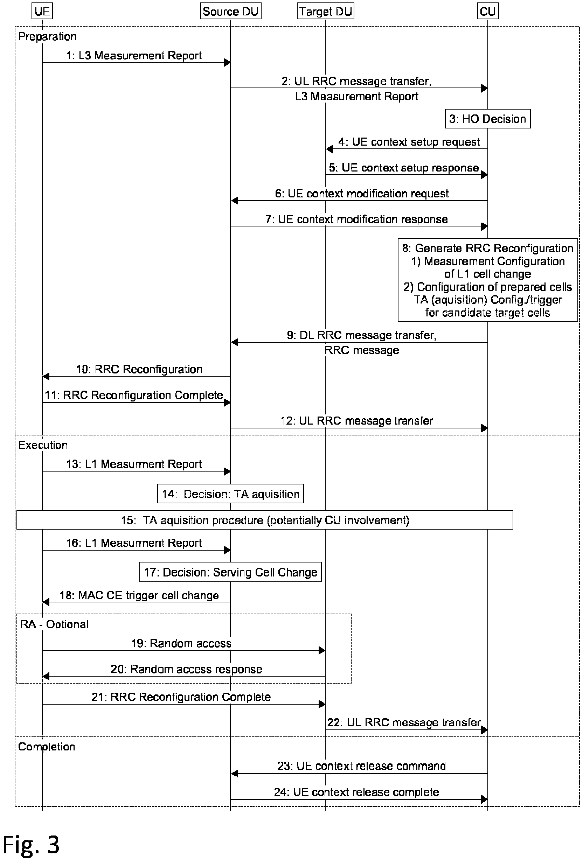

Figure 3 schematically illustrates an exemplary signalling diagram for L1/2 triggered mobility (LTM).

### 3GPP Standardization Relevance

Following agreements are the sub-set of agreements made in the last two RAN1 meetings (RAN1 #110-bis, October 2022 and RAN1 #111, November 2022) regarding the early Timing Advance (TA) acquisition of a candidate target cell for Rel-18 L1/L2 triggered mobility (LTM):

### RAN1 #110-bis-e

Support TA acquisition of candidate cell(s) before cell switch command is received in L1/L2 based mobility.

On mechanism to acquire TA of the candidate cells, the following solutions can be further studied:
RACH-based solutions, e.g., PDCCH ordered RACH, UE-triggered RACH, higher layer triggered RACH from NW other than L3 HO cmd
RACH-less solutions, e.g., SRS based TA acquisition, Rx timing difference based, RACH-less mechanism as in LTE, UE based TA measurement (including UE based TA measurement with one TAC from serving cell)

### RAN1 #111

On mechanism to acquire TA of the candidate cell(s) in Rel-18 LTM, at least support PDCCH ordered RACH.
The PDCCH order is only triggered by source cell
FFS (For Further Study): the details including content of DCI, RACH resource configuration, RAR transmission mechanism, etc.
Note: any other RACH-based solutions are for discussion separately
For PDCCH ordered RACH in LTM, at least the following enhancements are supported
Introduce indication of candidate cell and/or RO of candidate cell in DCI
configuration of RACH resource for candidate cell(s) is provided prior to the PDCCH order
FFS: whether/how to transmit RAR
On whether RAR is needed for PDCCH ordered RACH for a candidate cell in LTM, the following alternatives are considered for further study
Alt 1: RAR is needed
Alt 2: RAR is not needed
Note: If Alt 2 is supported, TA value of candidate cell is indicated in cell switch command
Alt 3: whether RAR is needed can be configured
L1/L2 triggered mobility (LTM) [00185] LTM denoted also as L1/2 inter-cell mobility, is one of the objectives for mobility enhancement in Rel. 18. According to the paradigm description, the decision about the cell change is based on L1 measurements and is made in the MAC layer in the Distributed Unit (DU).

Fig. 3 shows one exemplary message exchange for the inter-DU LTM scenario, captured for disaggregated architecture). In brief:
The UE provides the L3 measurements to the source DU, which are forwarded to the Centralized Unit (CU) (steps 1-2). Based on these measurements the CU decides about the cell preparation (HO Decision - step 3) and proceeds in setting up the UE context in the target DU (steps 4-5). CU communicates with the source DU for the modification of the UE context if needed and the provision of the target cell information (i.e., target cell RS configuration, TCI states, etc.) (steps 6-7).

In step 8, the CU creates and forwards the RRC Reconfiguration message to the source DU using a DL RRC Message Transfer and the latter forwards it to the UE (steps 9-10) which may include TA acquisition configurations if CU involvement is needed. UE responds with an RRC Reconfiguration Complete to the CU (steps 11-12).

Based on its configuration, the UE provides the periodic L1 reports to the source DU (step 13).

Based on the received L1 measurement report, the source DU may trigger the UE, e.g., by sending a PDCCH order, to acquire TA for the set of candidate cells (i.e., candidate cells for the handover target cell) (step 14-15). Regarding the mechanism to acquire TA of the candidate cells, in additional RACH-based PDCCH order-based mechanism, additional RACH-less solutions like Rx timing difference based, RACH-less mechanism as in LTE, SRS based TA acquisition can be further studied.

The source-DU/CU and candidate target-DUs/CUs coordinate on the TA acquisition method during LTM preparation phase (e.g., steps 4-5).

The UE continues L1 measurement reporting. Once the source DU decides that the UE should be handed over to a cell (i.e., target cell) of another DU (i.e., target DU) it triggers the cell switch, using a cell switch command (e.g., a MAC CE) (step 16-18). In one solution, the cell switch command may also contain the TA of the target cell.

Then the UE applies the RRC configuration for the target cell of target DU-indicated by the cell switch command (via MAC CE) and switches to the target DU. The UE may be configured to perform Random Access (RA) to the target cell as shown in steps 19-20; however, in other solutions, the UE may be configured to not perform the RA to the target cell as it has already acquired the TA of the target cell. To initiate the communication with the target DU, the UE transmits an RRC Reconfiguration Complete using already configured UL resources to the target cell of target DU, which is forwarded to the CU-CP (steps 21-22).

The CU releases the UE context from the source DU with a UE Context Release Request (steps 23-24).

It is initially agreed that the step 15 in Figure 3 will be triggered by the network so that the TA between the UE and the target cell is acquired. In this procedure there are two possible cases for acquisition of the TA.

### Case 1: UE will receive the TA of the target cell

In this case, the UE will receive the TA of the target DU/cell (either directly from target cell or indirectly from source cell, i.e., target DU/cell -> CU -> source DU/cell -> UE).

Problem #1: After the UE receives the TA of the target cell for the first time, the UE cannot ensure that the TA of the target cell is valid upon the cell switch command is received in step 18. This is because there is no such method that the UE will check the validity of the TA with target cell since there is no active UL between the UE and the target DU/cell.

### Case 2: Network will provide the TA of the target cell to the UE along with the MAC CE command in step 18

In this case, after the target DU/cell estimates the TA of the UE, the estimated TA will not be sent to the UE. Instead, the source DU/cell will receive the estimated TA from the target DU/cell and keeps this information until the cell switch trigger is decided at the source DU/cell. Once the source DU/cell decides to trigger the cell change towards the target cell that the TA had been acquired, the source DU/cell includes that TA information in the MAC CE command and UE will use the TA during handover to the target cell.

Problem #2: Network cannot ensure that the acquired TA from step 15 is still valid when it is sent to the UE in step 18. This is because ther eis no such method that the source DU/cell will check the validity of the acquired TA between the initial TA acquisition and triggering the cell switch.

### Common Problems for Case 2 and Case 3: Uncertainty of the TA validity

In either case, if the validity of the TA is not known, the following problem occur:
Problem #3: The source DU cannot know whether the re-trigger of the TA acquisition needed
Problem 3a: The source DU/cell may re-trigger the TA acquisition of target cell blindly which may lead unnecessary TA acquisition if the TA is already valid.
Problem 3b: The source DU/cell may not re-trigger the TA acquisition of the target cell and blindly assume that the TA is valid although the TA of the UE is invalid.
Problem #4: The source DU may not know whether the UE can skip the RACH or RACH based handover is needed. This problem is inline with the Problem #3 but it creates a problem in different part of the mobility procedure.
Problem 4a: The source DU/cell may trigger the RACHless TA via MAC CE trigger cell change although the acquired TA is invalid. In that case, the UE will fail to access to the target cell.
Problem 4b: The source DU/cell may trigger RACH based TA via MAC CE trigger cell change although the the acquire TA is valid. In that case, the UE will proceed with the RACH based handover and experience interruption during handover unnecessarily.

In this disclosure, several exemplary solutions are proposed, which may solve one or more of the aforementioned problems. The first exemplary solution is a UE based solution (for case #1), and the second exemplary solution is a network based solution (for case #2).

Solution #1 for Case #1: The UE will receive the TA (Timing Advance value) of the target cell and monitors the validity via target cell downlink (DL) measurements.

In this solution, a UE based method is proposed such that the UE will monitor the TA validity of the target cell and informs the network if the TA invalidity condition is met. This solution has two alternative methods to monitor and identify the TA invalidity of the target cell

### Solution #1A: Identift the TA invalidity of the target cell based on the target cell DL RSRP

In this solution, the UE stores the latest DL RSRP of the target cell upon the initial TA acquisition is performed.

As alternative, the UE stores the strongest beam ID (or RACH beam ID, if strongest and RACH beams are different) of the target cell.

As another alternative, the UE stores both target cell DL RSRP and strongest beam ID (or RACH beam ID, if strongest and RACH beams are different).

Then, the UE compares the initially stored DL RSRP or strongest beam ID or both after the initial TA acqusition. If the UE identifies a major change between the initially stored value and the value measured after TA acquisition, the UE sends an indication to the network to inform that the acquired TA is invalid. The condition for identification of the major change will be explained further below in more detail.

### Solution #1B: Identify the TA invalidity of the target cell based on the target cell DL synchronization

In this solution, the UE stores the latest DL synchronization value between the UE and the target cell (which is available as long as the UE measures the DL SSB RSRPs of the target cell). Then, the UE compares the initially stored DL synchronization with the DL synchronization that is monitored after the TA acquisition. If there is a certain amount of shift/jitter in the DL synchronization after the initial TA acquisition, the UE sends an indication to the network to inform that the acquired TA is invalid.

### Solution #2 for Case #2: The source DU/cell will receive the TA of the target cell and monitors the validity via target cell DL measurements received from the UE

In this solution, a network based method is proposed such that the source DU/cell will monitor the TA validity of the target cell based on the L1 measurement reports that the UE sends. This solution has two alternative methods to monitor the TA invalidity of the target cell at the source DU/cell.

### Solution #2A: The source DU identifies the TA validity via UE reported L1 RSRP Measurements

In this solution, the UE will report the L1 RSRP values for the target cell that the TA is acquired. The source DU will identify the deviation of the L1 RSRP values between the samples of the time that the TA is acquired and the samples of the time that the UE reported after the TA is acquired.

### Solution #2B: The source DU identifies the TA validity via the UE reported L1 measurements that includes the DL synchronization between the UE and the target cell

In this solution, the UE is configured to report the DL synchronization values that are obtained from the DL SSB measurements of the target cell. Hence the source DU monitors the change in the DL synchronization changes on the target cell DL and identifies the TA changes between the UE and the target cell.

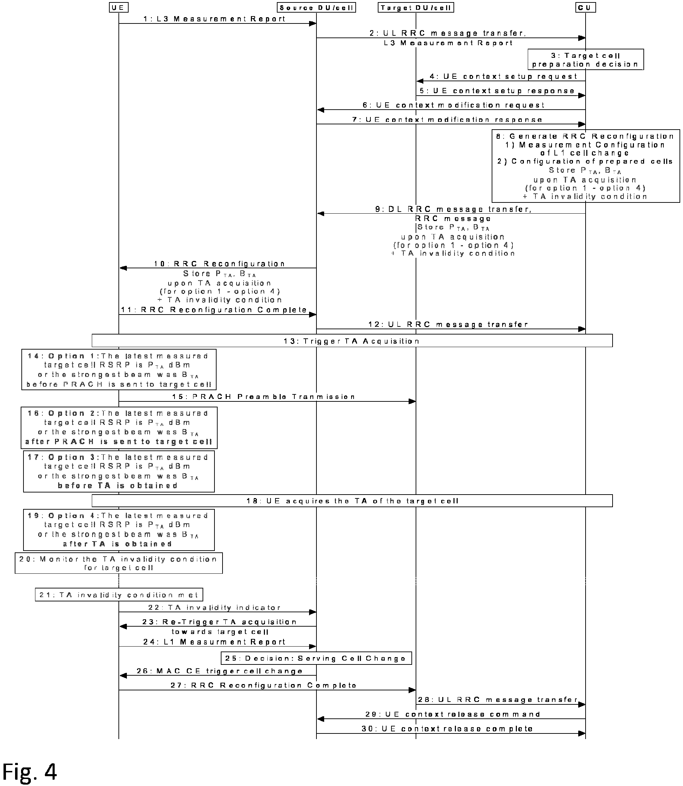

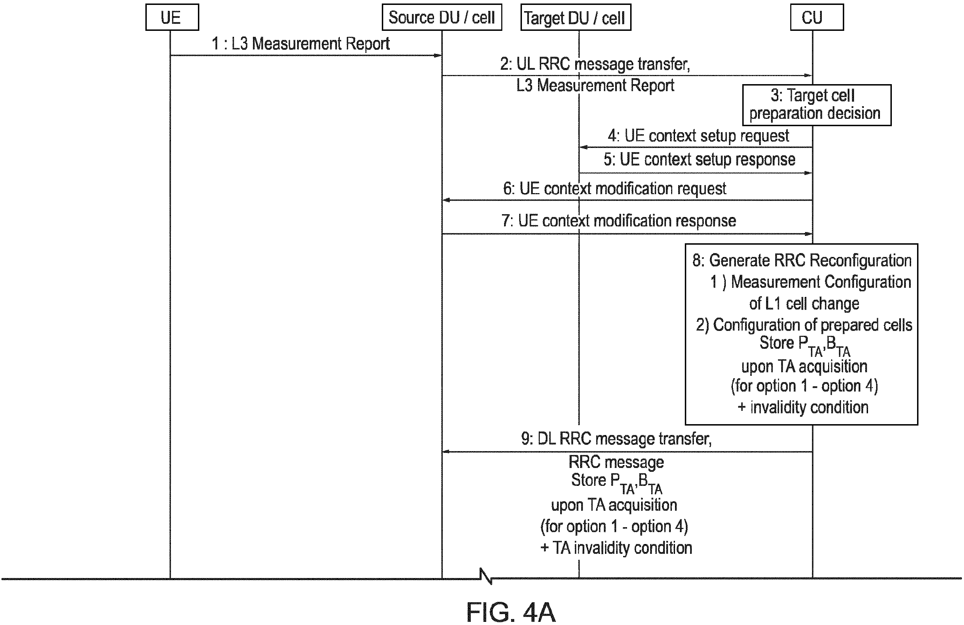

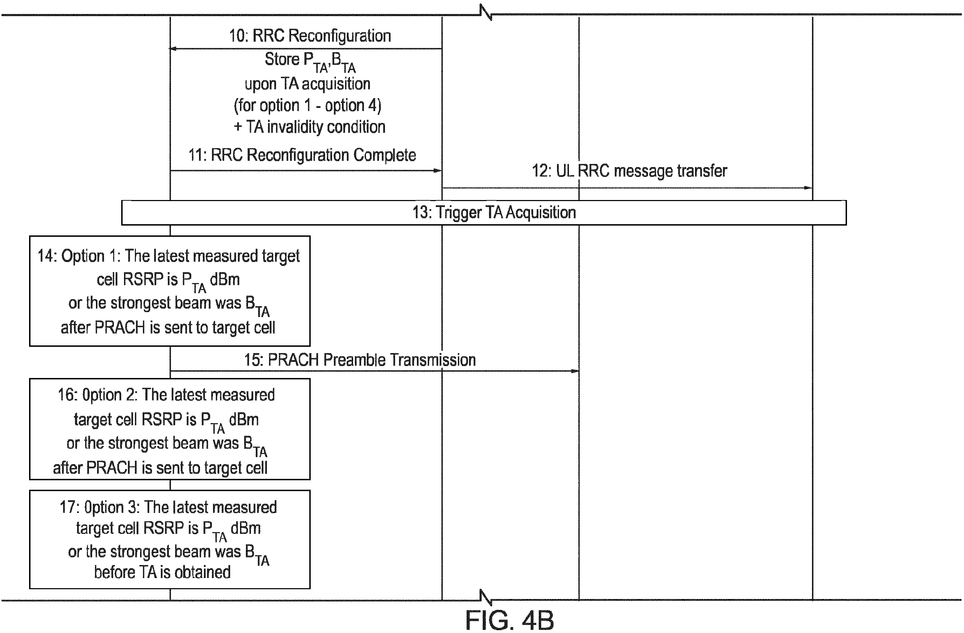

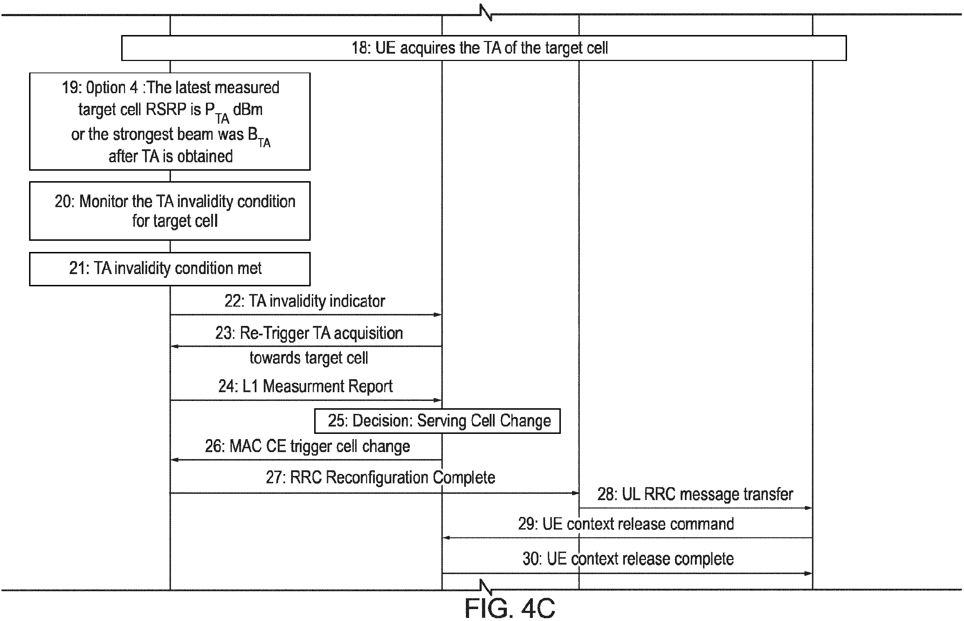

Figure 4 schematically illustrates an example of a first embodiment.

### Solution #1A for Case #1:

The message sequence chart of the UE based solution, i.e., solution #1A of case #1A is shown in Figure 4.

The UE sends the L3 measurement report to source DU and source DU forwards those measurements to the CU (in step 1 and 2). Then, the source CU determines to prepare the target cell for LTM (in step 4 to 7).

The CU generates the RRC Reconfiguration that will contain the necessary configuration for the UE to be applied upon the handover to target cell is triggered (in step 8). Herein, the UE is configured to store the TA of the target cell along with the RSRP P_TA and/or the strongest beam ID B_TA of the target cell in step 8, 9 and 10. UE is also configured to monitor the TA validity condition based on the stored P_TA and/or B_TA.

The UE receives the TA (Timing Advance value) of the target cell once the step 13 is completed.

The UE will store the TA of the target cell along with the RSRP of the target cell that the UE has measured during TA acquisition. There are e.g. four possible instances that the UE stores or culd store P_TA and/or B_TA:
- Option 1 (step 14): The latest measured target cell RSRP is P_TA dBm or the strongest beam was B_TA before PRACH is sent to target cell.
- Option 2 (step 16): The latest measured target cell RSRP is P_TA dBm or the strongest beam was B_TA after PRACH is sent to target cell.
- Option 3 (step 17): The latest measured target cell RSRP is P_TA dBm or the strongest beam was B_TA before TA is obtained.
- Option 4 (step 19): The latest measured target cell RSRP is P_TA dBm or the strongest beam was B_TA after the TA is obtained.

As another alternative, the UE can also store the serving cell RSRP P_(TA,serving ).

The UE sends the PRACH preamble to the target cell so that the target cell estimates the TA between the UE and the target cell (step 17).

The UE acquires the TA of the target cell (step 20).

The UE starts monitoring the TA invalidity condition for the target cell (step 20) where the condition was provided to the UE along with the RRC Reconfiguration in step 11. The invalidity condition can be either one of the followings or all below:
- |P_(current,target)-P_(TA,target) |≥P_(thr,target), where the P_(current, target) is the current RSRP of target cell and the P_thr is the threshold that the UE will compare for TA validity of the target cell
- |P_(current, serving )-P_(TA,serving) |≥P_(thr,serving) where the P_(current,serving) is the current RSRP of the serving cell and P_(thr,serving) is the threshold for this comparison
- |(|P_(TA,target)-P_(TA, serving) |-|P_(current,target)-P_(current, serving ) |)|≥P_(thr,serving,target) where the P_(thr,serving,target) is the threshold to identify the change in the power difference between the initial RSRP difference between the source and the target cell and the current power difference between the source and the target cell.
- B_(TA,target)≠B_(strongest,target), where the B_(strongest, target) is the beam ID of the target cell's strongest beam measured at the UE

Once the invalidity condition is met (step 21), the UE triggers the TA invalidity indicator to the source DU:
- This could be a separate MAC message sent to the DU.
- This could be indicated in the L1 measurements by indicating the validity/invalidity of the target cell.

The invalidity condition can trigger L1 measurement reporting or modify the ongoing L1 measurement reporting content.

The source DU, receiving the invalidity indication can re-trigger the TA acquisition of the target cell (step 23) and the steps 13, 15, 18 will be repeated to re-acquire the TA of the target cell (network implementation).

The UE continues to report the L1 measurements of the LTM candidate cells to the source DU/cell.

Source DU/cell decides to trigger cell change towards the target cell in step 25.

The source DU/cell sends the MAC CE command to trigger the cell change.
- If switching command for RACH-less switching is received for cell having invalid TA (based on the condition configured in step 21), the UE indicates the fallback to RACH access to target DU/cell via L1 or MAC message so that the uplink grant in target can be released.

In the rest of the steps (step 27-30), the UE completes the LTM towards the target DU/cell.

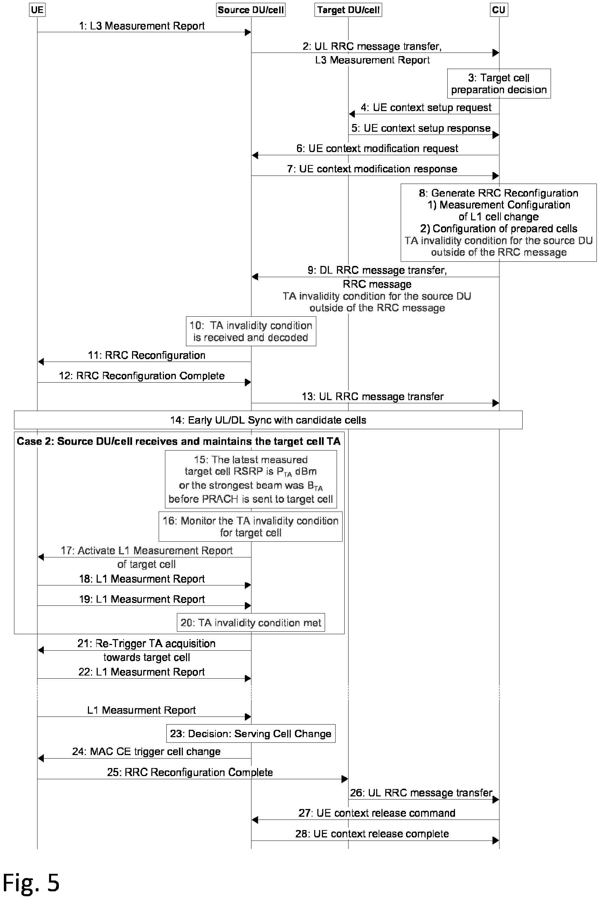

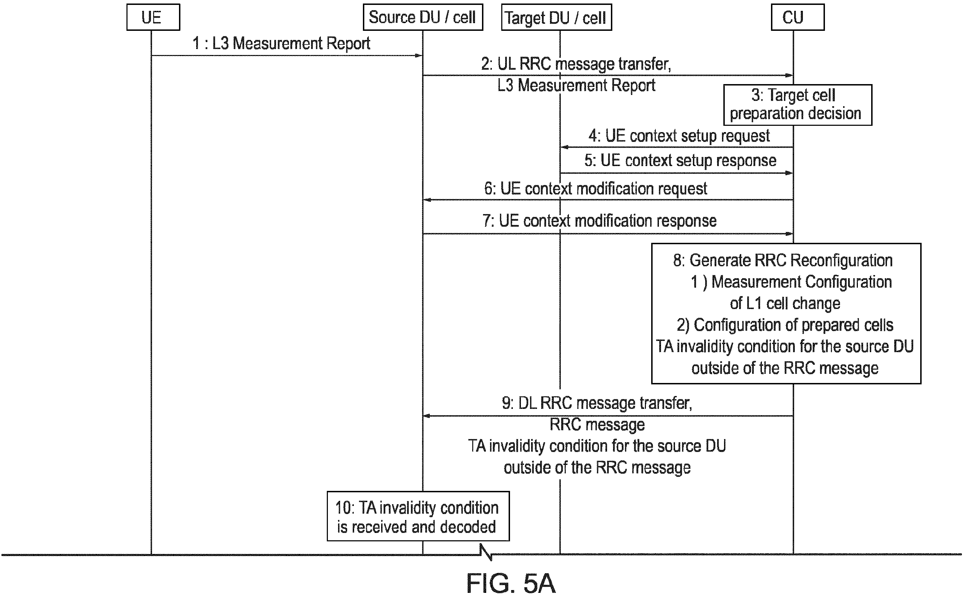

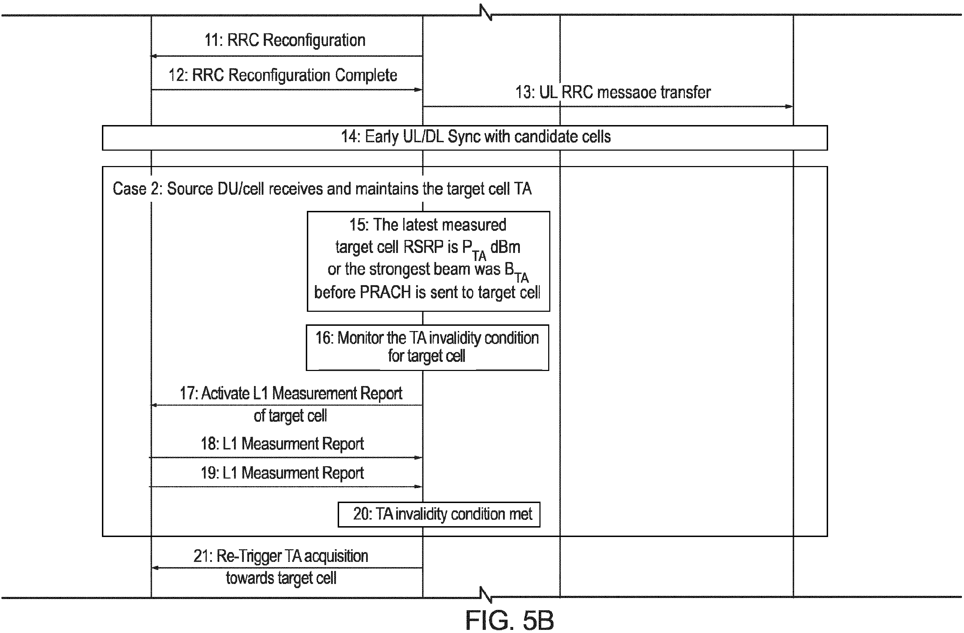

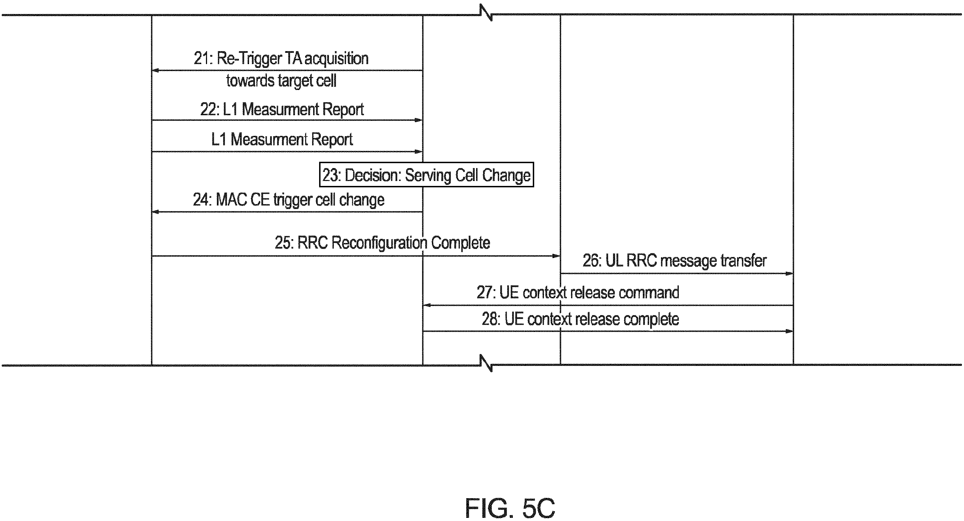

Figure 5 schematically illustrates an example of a second embodiment.

### Solution #1B for Case #1:

In this solution, the TA invalidity condition will be different than the condition defined in Figure 2, step 8. Hence, the rest of the UE behavior will be based on that new condition that is described below:
The invalidity condition is based on the DL synchronization between the UE and the target cell such as
IT_(DL,SSB,TA,target)-T_(DL,SSB,current,target) |≥T_(thr,target) where the T_(DL,SSB,current,target) is the current DL SSB based synchronisation between the UE and the target cell at any time measured at the UE side. The T_thr is the threshold to determine the difference between T_(DL, SSB, current, target) and T_(DL,SSB,TA,target). The T_(DL,SSB,TA,target) is the initial DL SSB based synchronization between the UE and the target cell during the TA acquisition that the UE stores.

The UE can store the T_(DL,SSB,TA,target) in one of the following instances:
Option 1 (step 14): The latest measured target cell DL synchronization is T_(DL,SSB,TA,target) before PRACH is sent to target cell.
Option 2 (step 16): The latest measured target cell DL synchronization is T_(DL,SSB,TA,target) after PRACH is sent to target cell.
Option 3 (step 17) The latest measured target cell DL synchronization is T_(DL,SSB,TA,target) before TA is obtained.
Option 4 (step 19): The latest measured target cell DL synchronization is T_(DL,SSB,TA,target) after the TA is obtained.

As another alternative, the UE can also store the serving cell DL synchronization T_(DL,SSB,TA,serving )and compare that against the current DL synchronization value T_(DL,SSB,serving,current) to see if the DL synchronization deviation exceeds the threshold T_(thr,serving), i.e., IT _(DL,SSB,serving, T A)- T _(DL,SSB,serving,current) |≥T_(thr,serving).

In another alternative, the UE compares the deviation between the difference of initial DL synchronization of source and target cell and the current difference of the DL synchronization of the source and the target cell such as |(|T_(DL,SSB,TA,target)-T_(DL,SSB,serving,TA) |-|T_(DL,SSB,current,target)-T_(DL,SSB,serving,current) |)|≥T_(thr,serving,target).

Then, the UE monitors this condition after the TA is acquired and upon expiry of this condition, the UE triggers the TA invalidity indication to the source DU/cell.

### Solution #2A for Case #2:

The message sequence chart of the UE based solution, i.e., solution #2 of case #2 is shown in Figure 3. The novel aspects are shown in red.

The CU configures the source DU with the TA invalidity condition outside of the RRC container so that the source DU can receive and decode the TA invalidity condition (step 8-10). The difference between this condition and the condition in solution 1 is that, this condition is provided to the source DU and not forwarded to the UE. Instead, the condition is monitored at the source DU.

In step 13, the UE sends the PRACH preamble to the target cell, and the estimated TA will be provided to the source DU/cell.

The source DU/cell will store the latest RSRP of the target cell, P_TA and/or strongest beam ID B_TA that is measured at the UE side (step 15). The time occasion of the P_TA and B_TA can be
- Before or after the trigger of the TA acquisition
- Before or after the TA is acquired from target cell
- In either case above, if the UE is not already reporting the L1 measurements, the source DU can trigger the UE to provide the L1 measurements for that purpose

As another alternative, the source DU can also store the serving cell RSRP P_(TA, serving ).

Source DU activates the L1 measurement for that target cell (if not activated yet) and monitors the TA invalidity condition (in step 16) that was received in step 9 and decoded in step 10. The invalidity condition can be either one of the followings or both below
- |P_(current,target)-P_(TA,target) |≥P_(thr,target), where the P _(current, target) is the current reported RSRP of target cell and the P_thr is the threshold that the source DU/cell will compare for TA validity of the target cell
- |P_(current,serving )-P_(TA,serving) |≥P_(thr,serving) where the P_(current,serving) is the current reported RSRP of the serving cell and P_(thr,serving) is the threshold for this comparison
- |(|P_(TA,target)-P_(TA,serving,target) |-|P_(current,target)-P_(current, serving ) |)|≥P_(thr,serving,target) where the P_(thr,serving,target) is the threshold to identify the change in the power difference between the initial RSRP difference between the source and the target cell and the current power difference between the source and the target cell.
- B_TA≠B_strongest, where the B_strongest is the beam ID of the target cell's strongest beam measured at the UE and reported to the source DU/cell.

Once the invalidity condition is met (step 20), the source DU re-triggers the TA acquisition of the target cell (in step 21).

Upon the cell switch trigger decision is taken at the source DU side, if the TA invalidity condition is met or has been met, the source DU sends the MAC CE command that includes the RACH based handover instruction

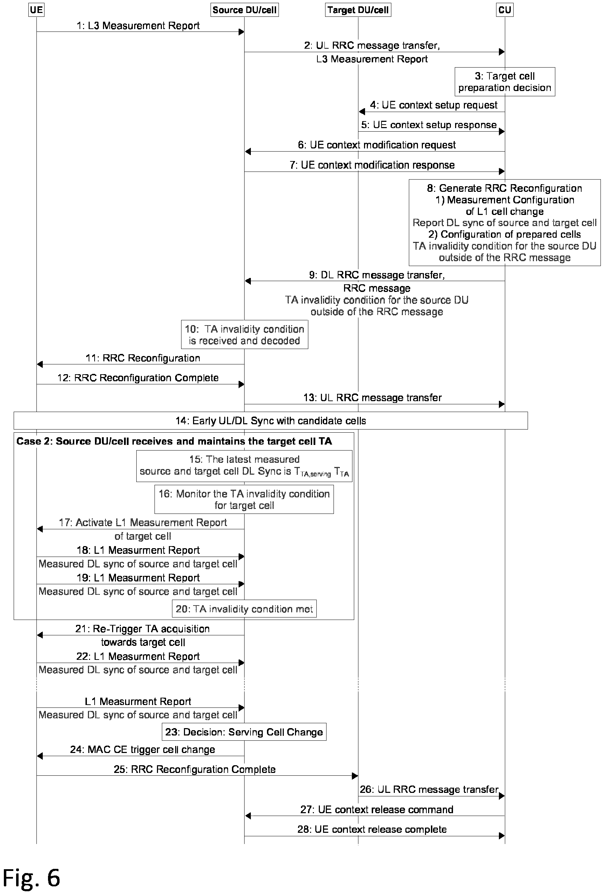

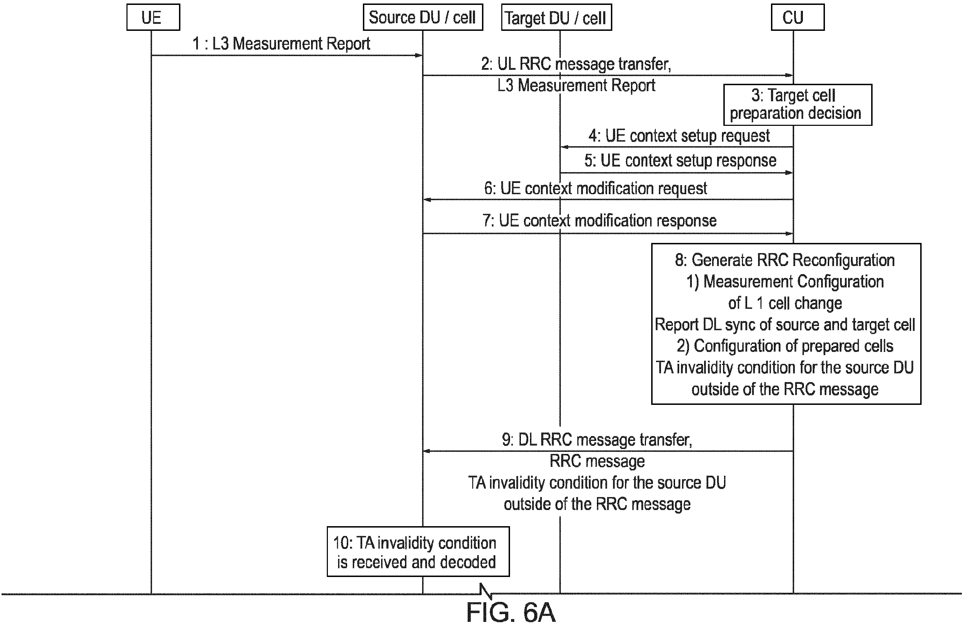

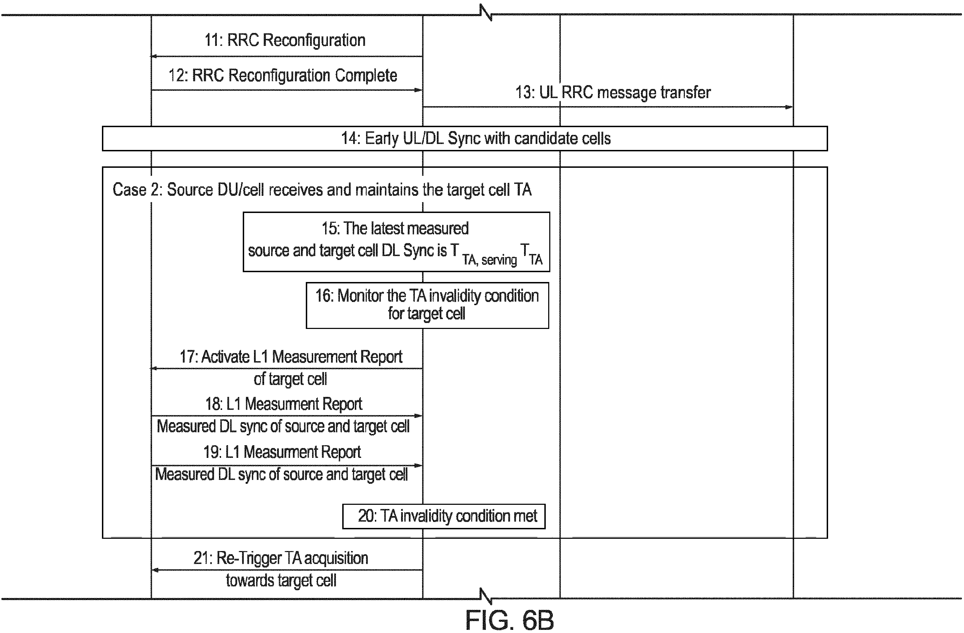

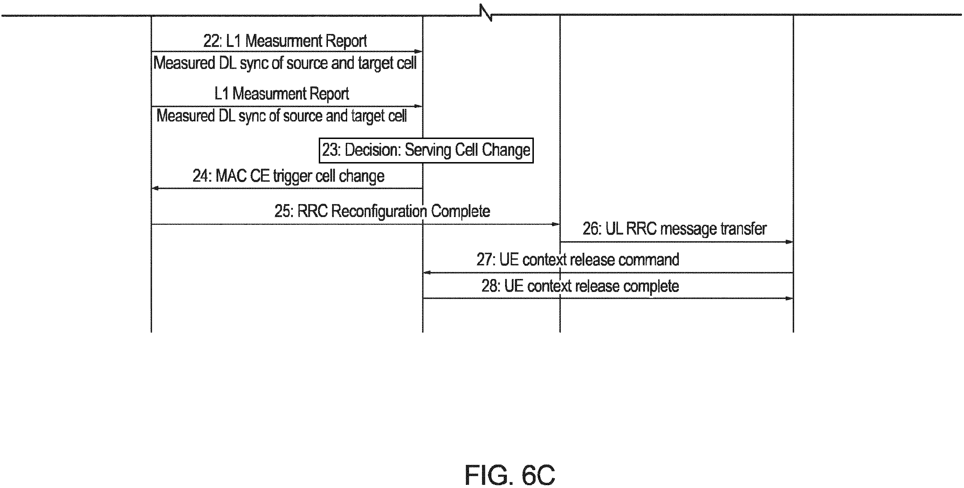

Figure 6 schematically illustrates an example of a third embodiment.

### Solution #2B for Case #2:

In this solution, the TA invalidity condition will be different than the condition defined in Figure 5, step 8-10. Besides, the UE is required to report additional information in the L1 Measurement Report so that the source DU/cell can monitor the condition by using the additionally reported information. Therefore, the rest of the source DU/cell behavior will be based on that new condition.

In step 8, the CU configures the UE to report the DL synchronization of the source and target cell in L1 measurements and this configuration is provided to the UE via steps 9 and 11. Hence, the UE sends the DL synchronization of both source and target cell in each L1 measurements (e.g., step 18, 19).

The new condition provided from CU to source DU is as described below:
The invalidity condition is based on the DL synchronization between the UE and the target cell such as
IT_(DL,SSB,TA,target)-T_(DL,SSB,current,target) |>T_(thr,target) where the T_(DL,SSB,current,target) is the current DL SSB based synchronisation between the UE and the target cell at any time measured at the UE side and reported to the source DU. The T_thr is the threshold to determine the difference between T_(DL,SSB,current,target) and T_(DL,SSB,TA,target). The T_(DL,SSB,TA) is the initial DL SSB based synchronization between the UE and the target cell during the TA acquisition that the UE send to the source DU and the source DU stores.

As another alternative, the source DU can also store the serving cell DL synchronization T_(DL,SSB,TA,serving )reported by the UE and compare that against the current DL synchronization value T_(DL,SSB,serving,current) to see if the DL synchronization deviation exceeds the threshold T_(thr,serving), i.e., |T_(DL,SSB,serving,TA)-T_(DL,SSB,serving,current) |≥T_(thr,serving).

In another alternative, the source DU compares the deviation between the difference of initial DL synchronization of source and target cell and the current difference of the DL synchronization of the source and the target cell such as |(|T_(DL,SSB,TA,target)-T_(DL, S SB, serving, TA) |-|T_(DL,SSB,current,target)-T_(DL,SSB,serving,current) |)|≥T_(thr,serving,target).

Then, the source DU monitors this condition after the TA is acquired (after step 15 onwards) and upon expiry of this condition (step 19), the source DU re-triggers the TA acquisition.

Upon the cell switch trigger decision is taken at the source DU side, if the TA invalidity condition is met or has been met, the source DU sends the MAC CE command that includes the RACH based handover instruction.

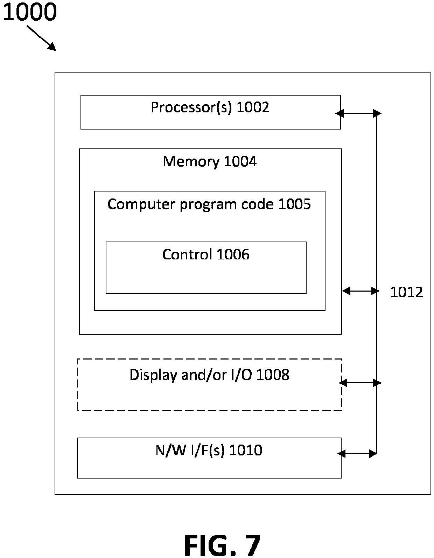

Figure 7 schematically illustrates an example apparatus configured to implement at least one example described herein.

FIG. 7 is an example apparatus 1000, which may be implemented in hardware, configured to implement the examples described herein. The apparatus 1000 comprises at least one processor 1002 (e.g., an FPGA and/or CPU), at least one memory 1004 including computer program code 1005, wherein at the least one memory 1004 and the computer program code 1005 are configured to, with at least one processor 1002, cause the apparatus 1000 to implement circuitry, a process, component, module, or function (collectively control 1006) to implement the examples described herein, including enabling using per-target-cell CU-UP in CPA/CPC initiation.

The apparatus 1000 optionally includes a display and/or I/O interface 1008 that may be used to display aspects or a status of the methods described herein (e.g., as one of the methods is being performed or at a subsequent time), or to receive input from a user such as with using a keypad, touchscreen, touch area, microphone, biometric recognition circuitry, etc. The apparatus 1000 includes one or more network (N/W) interfaces (I/F(s)) 1010. The N/W I/F(s) 1010 may be wired and/or wireless and communicate over the Internet/other network(s) using any communication technique. The N/W I/F(s) 1010 may comprise one or more transmitters and one or more receivers. The N/W I/F(s) 1010 may comprise standard well-known components such as an amplifier, filter, frequency-converter, (de)modulator, and encoder/decoder circuitries and one or more antennas.

The apparatus 1000 to implement the functionality of control 1006 may be the UE (110), RAN node 170, network element(s) 190, or any of the other items depicted in a previous Fig. such as the UE 110, MN 170, SN1-CU-CP 196-1, SN1-CU-UP1 196-2, SN1-CU-UP2 196-3, S-GW 190-1, MME 190-2, UPF 190-3, CU-CP1 796, CU-CP1 896, and apparatus 900. Apparatus 1000 may be part of a self-organizing/optimizing network (SON) node, such as in a cloud. The apparatus 1000 may also be distributed throughout the network 100 including within and between apparatus 1000 and any network element (such as a network control element (NCE) 190 and/or the RAN node 170 and/or the UE 110) including the network elements depicted in previous figures.

Interface 1012 enables data communication between the various items of apparatus 1000, as shown in FIG. 7. For example, the interface 1012 may be one or more buses such as address, data, or control buses, and may include any interconnection mechanism, such as a series of lines on a motherboard or integrated circuit, fiber optics or other optical communication equipment, and the like. Computer program code 1005, including control 1006 may comprise object-oriented software configured to pass data/messages between objects within computer program code 1005. The apparatus 1000 need not comprise each of the features mentioned, or may comprise other features as well.

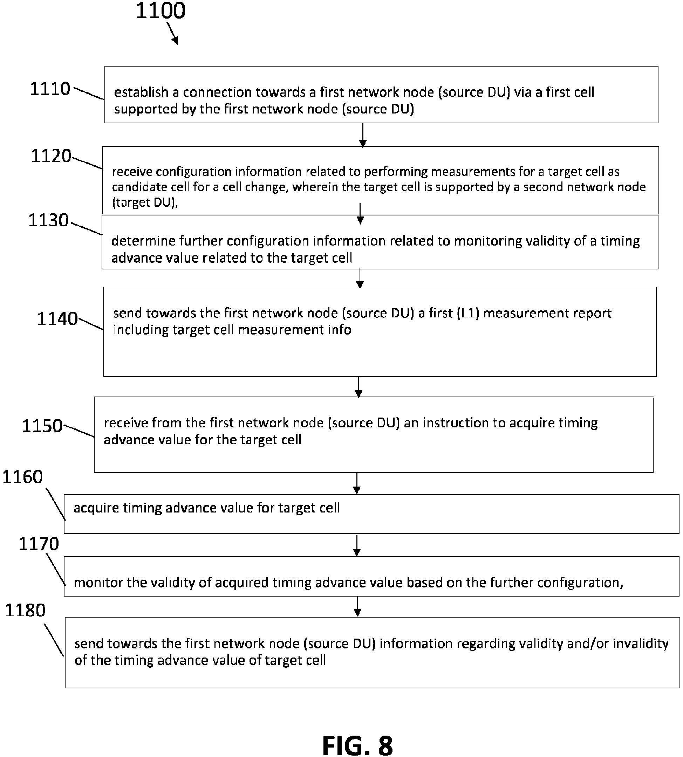

Figure 8 schematically illustrates an example of a method to implement at least one example described herein.

FIG. 8 is an example method 1100 for configuring a .

User equipment (UE) to support establishing a connection towards at least one network node of a radio access network, RAN. To implement the method the UE may comprise:
at least one processor; and
at least one memory storing instructions that, when executed by the at least one processor, cause the UE at least to perform at least some of the method steps below:

At 1110, the method includesestablishing a connection towards a first network node (source DU) via a first cell supported by the first network node (source DU),

at step 1120 the method includes receiving configuration information related to performing measurements for a target cell as candidate cell for a cell change, wherein the target cell is supported by a second network node (target DU),
at step 1130 the method includes determining further configuration information related to monitoring validity of a timing advance value related to the target cell,
at step 1140 the method includes sending towards the first network node (source DU) a first (L1) measurement report including target cell measurement info,
at step 1150 the method includes receiving from the first network node (source DU) an instruction to acquire timing advance value for the target cell,
at step 1160 the method includes acquiring timing advance value for target cell,
at step 1170 the method includes monitoring the validity of acquired timing advance value based on the further configuration,
at step 1180 the method includes sending towards the first network node (source DU) information regarding validity and/or invalidity of the timing advance value of target cell.

To implement the method the UE may comprise specific means to perform specific functions/tasks, e.g. to perform one or more of the listed steps above the UE may include establishing means, receiving means, determining means, acquisition means, and/or montoring means. The specific means may be implemented using hardware and/or software, e.g. specific circuitry and/or specific computer program code.

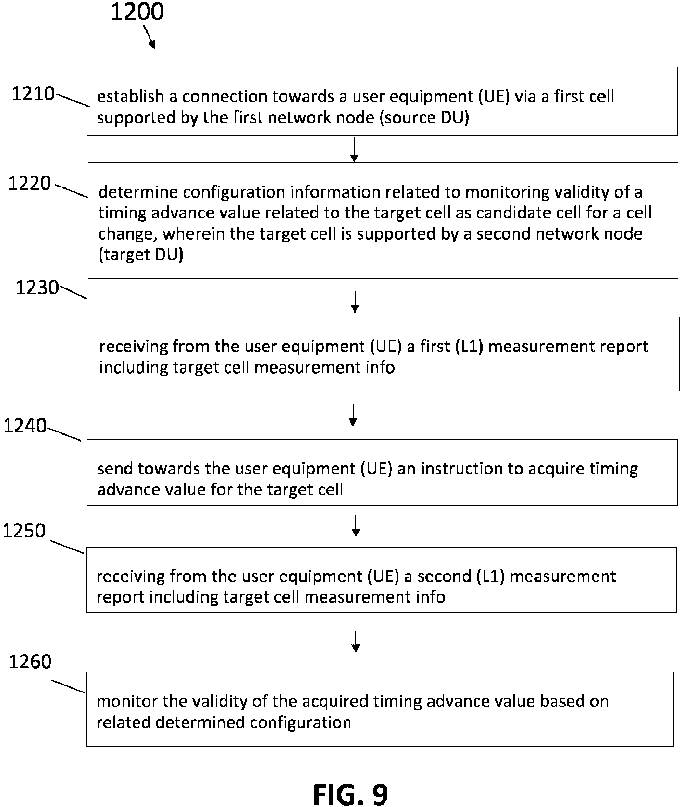

Figure 9 schematically illustrates an example of a method to implement at least one example described herein.

FIG. 9 is an example method 1200 for configuring a first network node (source DU) to support establishing a connection towards at least one user equipment (UE) via a radio access network, RAN. To implement the methd the first network node (source DU) may comprise:
at least one processor; and
at least one memory storing instructions that, when executed by the at least one processor, cause the first network node (source DU) at least to perform at least some of the method steps below:

At step 1210, the method includes:
establishing a connection towards a user equipment (UE) via a first cell supported by the first network node (source DU),
at step 1220 the method includes determining configuration information related to monitoring validity of a timing advance value related to the target cell as candidate cell for a cell change, wherein the target cell is supported by a second network node (target DU),
at step 1230 the method includes receiving from the user equipment (UE) a first (L1) measurement report including target cell measurement info,
at step 1240 the method includes sending towards the user equipment (UE) an instruction to acquire timing advance value for the target cell,
at step 1250 the method includes receiving from the user equipment (UE) a second (L1) measurement report including target cell measurement info,
at step 1260 the method includes monitoring the validity of the acquired timing advance value based on related determined configuration.

To implement the method the first network node may comprise specific means to perform specific functions/tasks, e.g. to perform one or more of the listed steps above the UE may include establishing means, receiving means, determining means, acquisition means, and/or montoring means. The specific means may be implemented using hardware and/or software, e.g. specific circuitry and/or specific computer program code.

It should nevertheless be noted that the apparatus (device) features described above correspond to respective method features that may however not be explicitly described, for reasons of conciseness. The disclosure of the present document is considered to extend also to such method features. In particular, the present disclosure is understood to relate to methods of operating the devices described above, and/or to providing and/or arranging respective elements of these devices.

Further, according to some further example embodiments, there is also provided a respective apparatus (e.g., implementing the UE, the CU, the DU, etc., as described above) that comprises at least one processing circuitry, and at least one memory for storing instructions to be executed by the processing circuitry, wherein the at least one memory and the instructions are configured to, with the at least one processing circuitry, cause the respective apparatus to at least perform the respective steps as described above.

Yet in some other example embodiments, there is provided a respective apparatus (e.g., implementing the UE, the CU, the DU, etc., as described above) that comprises respective means configured to at least perform the respective steps as described above.

It is to be noted that examples of embodiments of the disclosure are applicable to various different network configurations. In other words, the examples shown in the above described figures, which are used as a basis for the above discussed examples, are only illustrative and do not limit the present disclosure in any way. That is, additional further existing and proposed new functionalities available in a corresponding operating environment may be used in connection with examples of embodiments of the disclosure based on the principles defined.

It should also to be noted that the disclosed example embodiments can be implemented in many ways using hardware and/or software configurations. For example, the disclosed embodiments may be implemented using dedicated hardware and/or hardware in association with software executable thereon. The components and/or elements in the figures are examples only and do not limit the scope of use or functionality of any hardware, software in combination with hardware, firmware, embedded logic component, or a combination of two or more such components implementing particular embodiments of the present disclosure.

It should further be noted that the description and drawings merely illustrate the principles of the present disclosure. Those skilled in the art will be able to implement various arrangements that, although not explicitly described or shown herein, embody the principles of the present disclosure and are included within its spirit and scope. Furthermore, all examples and embodiment outlined in the present disclosure are principally intended expressly to be only for explanatory purposes to help the reader in understanding the principles of the proposed method. Furthermore, all statements herein providing principles, aspects, and embodiments of the present disclosure, as well as specific examples thereof, are intended to encompass equivalents thereof.

## Claims

1. User equipment (UE) configured to support establishing a connection towards at least one network node of a radio access network, RAN, the UE comprising:
at least one processor; and
at least one memory storing instructions that, when executed by the at least one processor, cause the UE at least to:
- establish a connection towards a first network node (source DU) via a first cell supported by the first network node (source DU),
- receive configuration information related to performing measurements for a target cell as candidate cell for a cell change, wherein the target cell is supported by a second network node (target DU),
- determine further configuration information related to monitoring validity of a timing advance value related to the target cell,
- send towards the first network node (source DU) a first (L1) measurement report including target cell measurement info,
- receive from the first network node (source DU) an instruction to acquire timing advance value for the target cell,
- acquire timing advance value for target cell,
- monitor the validity of acquired timing advance value based on the further configuration,
- send towards the first network node (source DU) information regarding validity and/or invalidity of the timing advance value of target cell.

2. User equipment (UE) according to claim 1, wherein the further configuration condition includes an invalidity condition related to a power difference or relationship or comparison between at least two signal level or quality values, in particular RSRP values, RSRQ values, or SINR values, measured by the UE and related to the target cell and/or the first cell.

3. User equipment (UE) according to claim 1, wherein the further configuration condition includes an invalidity condition related to beam measurement values measured by the UE and related to the target cell.

4. User equipment (UE) according to claim 1, wherein the further configuration condition includes an invalidity condition related to a difference or relationship or comparison between at least two timing values measured by the UE and related to downlink synchronization signals of the target cell and/or the first cell.

5. User equipment (UE) according to claim 2, 3 or 4, wherein the UE is further configured to:
- monitor the validity of acquired timing advance value based on the received invalidity condition,
- send towards the first network node (source DU) an invalidity information if the invalidity condition is met.

6. First network node (source DU) configured to support establishing a connection towards at least one user equipment (UE) via a radio access network, RAN, the first network node (source DU) comprising:
at least one processor; and
at least one memory storing instructions that, when executed by the at least one processor, cause the first network node (source DU) at least to:
- establish a connection towards a user equipment (UE) via a first cell supported by the first network node (source DU),
- determine configuration information related to monitoring validity of a timing advance value related to the target cell as candidate cell for a cell change, wherein the target cell is supported by a second network node (target DU),
- receiving from the user equipment (UE) a first (L1) measurement report including target cell measurement info,
- send towards the user equipment (UE) an instruction to acquire timing advance value for the target cell,
- receiving from the user equipment (UE) a second (L1) measurement report including target cell measurement info,
- monitor the validity of the acquired timing advance value based on related determined configuration.

7. First network node (source DU) according to claim 6, further configured to support:
- send towards the user equipment a trigger to re-acquire timing advance value of target cell if the validity of the acquired timing advance value expired.

8. First network node (source DU) according to claim 6, wherein the configuration condition includes an invalidity condition related to a power difference or relationship or comparison between at least two signal level or quality values, in particular RSRP values, RSRQ values, or SINR values, measured by the UE and related to the target cell and/or the first cell.

9. First network node (source DU) according to claim 6, wherein the configuration condition includes an invalidity condition related to beam measurement values measured by the UE and related to the target cell.

10. First network node (source DU) according to claim 6, wherein the configuration condition includes an invalidity condition related to a difference or relationship or comparison between at least two timing values measured by the UE and related to downlink synchronization signals of the target cell and/or the first cell.

11. First network node (source DU) according to claim 8, 9 or 10, wherein the first network node is further configured to:
- monitor the validity of acquired timing advance value based on the determined invalidity condition,
- send towards the user equipment (UE) an indication to re-acquire the timing advance value of the target cell if the invalidity condition is met.

12. First network node (source DU) according to claim 8, 9 or 10, wherein the first network node is further configured to:
- monitor the validity of acquired timing advance value based on the determined invalidity condition,
- determine and monitor a cell switch condition, and if the cell switch condition is met,
- send towards the user equipment (UE) an indication to perform cell switch to the target cell by sending a MAC CE message that includes a RACH based handover instruction if the invalidity condition is met, or by sending a MAC CE message that includes a RACHless based handover instruction if the timing advance value of the target cell is still valid.

13. First network node (source DU) according to claim 6, wherein the configuration condition is received from a third network node, wherein the third network node (CU) is connected to and controls the first network node (source DU).

14. First network node (source DU) according to claim 6, wherein the first network node is further configured to:
- determine configuration information related to monitoring validity of a timing advance value related to the second target cell as candidate cell for a cell change, wherein the second target cell is supported by a network node different from the first network node (source DU),
- receiving from the user equipment (UE) the first (L1) measurement report including also the second target cell measurement info,
- send towards the user equipment (UE) an instruction to acquire timing advance value for the second target cell,
- receiving from the user equipment (UE) the second (L1) measurement report including also the second target cell measurement info,
- monitor the validity of the acquired timing advance values based on related determined configuration.

15. First network node (source DU) according to claim 8, 9 or 10, wherein the first network node is further configured to:
- determine and monitor a cell switch condition for the target cell,
- determine and monitor a cell switch condition for the second target cell, and if the cell switch condition for both target and second target cell are met,
- determine the validity of the acquired related timing advance values, and
- decide to switch to the cell which has a valid timing advance value.

16. A method for a User equipment (UE), the method comprising:
- establishing a connection towards a first network node (source DU) via a first cell supported by the first network node (source DU),
- receiving configuration information related to performing measurements for a target cell as candidate cell for a cell change, wherein the target cell is supported by a second network node (target DU),
- determining further configuration information related to monitoring validity of a timing advance value related to the target cell,
- sending towards the first network node (source DU) a first (L1) measurement report including target cell measurement info,
- receiving from the first network node (source DU) an instruction to acquire timing advance value for the target cell,
- acquiring timing advance value for target cell,
- monitoring the validity of acquired timing advance value based on the further configuration,
- sending towards the first network node (source DU) information regarding validity and/or invalidity of the timing advance value of target cell.

17. A method for a first network node (source DU), the method comprising:
- establishing a connection towards a user equipment (UE) via a first cell supported by the first network node (source DU),
- determining configuration information related to monitoring validity of a timing advance value related to the target cell as candidate cell for a cell change, wherein the target cell is supported by a second network node (target DU),
- receiving from the user equipment (UE) a first (L1) measurement report including target cell measurement info,
- sending towards the user equipment (UE) an instruction to acquire timing advance value for the target cell,
- receiving from the user equipment (UE) a second (L1) measurement report including target cell measurement info,
- monitoring the validity of the acquired timing advance value based on related determined configuration.

18. A computer program comprising instructions for causing an apparatus to perform the method according to any one of claims 16 to 17.

19. A memory storing computer readable instructions for causing an apparatus to perform the method according to any one of claims 16 to 17.

20. An apparatus comprising means for performing the method steps of any one of claims 16 to 17.
